# EUROPEAN PATENT APPLICATION

(11) **EP 1 983 175 A1**
(43) Date of publication of application: **22.10.2008**
(21) Application number: 07251618.0
(22) Date of filing: 17.04.2007
(51) Int. Cl.: F02D 9/10, F16K 1/32

(54) **Rotary device and method for retaining a shaft within a housing of a rotary device**

(71) Applicant: Delphi Technologies, Inc., Troy, Michigan 48007 (US)
(72) Inventor: Marx, Patrice, 54650 Saulnes (LU)
(74) Representative: Waller, Stephen

(57) **Abstract**

A rotary device comprising a shaft mounted within a housing to be rotatable about a rotary axis, the housing including an opening having a minimum diameter greater than or equal to the diameter of the shaft to permit an end of the shaft to be inserted therethrough, a portion of said opening having a radial spacing from said rotary axis less than the radius of the shaft, said end of the shaft including a circumferential groove into which said portion of the opening is receivable to prevent axial movement of the shaft when the shaft is aligned with said rotary axis, a locating means being mountable in or on said housing adjacent said opening to be located over said end of the shaft whereby the locating means radially locates and holds said end of the shaft in alignment with said rotary axis.

## Description

The present invention relates to a rotary device, such as a butterfly valve, and a method for retaining a shaft within a housing of a rotary device against axial movement relative to the housing.

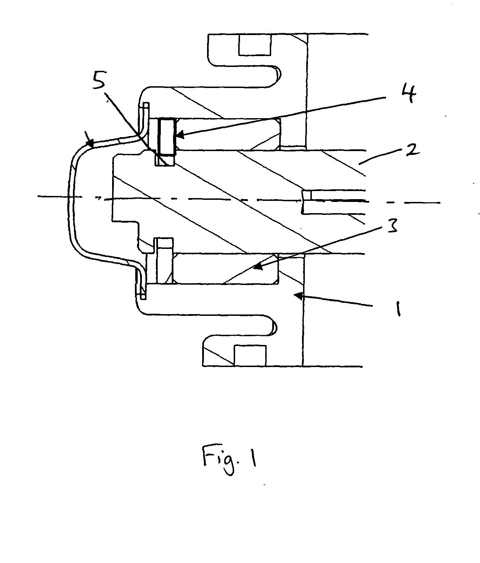

A butterfly valve is frequently used for metering a flow rate of gas, especially of combustion air supplied to a combustion engine, and of recirculated exhaust gases. Such rotary device typically comprises a housing 1 through which there passes a passage, an approximately disk-shaped throttling member positioned in the passage, wherein said throttling member is mounted to rotate with a shaft 2, wherein said shaft is transverse to the passage and journal-mounted in the housing 1 on each side of the passage. An actuating gear is typically over-moulded on one end of the shaft to enable the shaft to be driven by an actuating motor via a gearbox. The other end of the shaft is supported in a bush 3 in one side of the housing 1 and located in place against translational movement along its rotational axis by means of a circlip 4 located in a peripheral groove 5 formed in the end of the shaft 2. Such known shaft fixing arrangement is illustrated in Fig. 1.

The installation of the circlip is a time consuming and difficult operation in terms of manufacturing, increasing the cost of the part.

According to the present invention there is provided a rotary device, for example a butterfly valve, comprising a shaft mounted within a housing to be rotatable about a rotary axis, the housing including an opening having a minimum diameter greater than or equal to the diameter of the shaft to permit an end of the shaft to be inserted therethrough, a portion of said opening having a radial spacing from said rotary axis less than the radius of the shaft, said end of the shaft including a circumferential groove into which said portion of the opening is receivable to prevent axial movement of the shaft when the shaft is aligned with said rotary axis, a locating means being mountable in or on said housing adjacent said opening to be located over said end of the shaft whereby the locating means radially locates and holds said end of the shaft in alignment with said rotary axis.

Preferably said opening comprises a circular aperture having a centre offset from said rotary axis and a diameter equal to or greater than the diameter of the shaft.

Preferably said locating means comprises a bush locatable within a bore adjacent said opening and cooperating with said portion of the opening and said circumferential groove of said shaft to retain said end of the shaft within the housing for rotation about said rotary axis.

According to a further aspect of the present invention, there is provided a method of retaining a shaft within a housing of a rotary device to be rotatable about a rotary axis, said housing including an opening having a minimum diameter greater than or equal to the diameter of the shaft to permit an end of the shaft to be inserted therethrough, a portion of said opening having a radial spacing from said rotary axis less than the radius of the shaft, said end of the shaft including a circumferential groove into which said portion of the opening is receivable, comprising the steps of inserting said end of said shaft through said opening, aligning said shaft with said rotary axis whereby said portion of the opening is received within said circumferential groove, and mounting a locating means on or in the housing over said end of the shaft to locate and hold said end of the shaft in alignment with said rotary axis.

Preferably said locating means comprises a bush and the step of mounting said locating means on or in the housing comprises inserting said bush into a bore in said housing adjacent said opening to retain said end of the shaft within the housing for rotation about said rotary axis.

An embodiment of the present invention will now be described, by way of example, with reference to the accompanying drawings, in which:-
Fig. 1 shows a known shaft fixing arrangement, as discussed above;
Fig. 2 is a perspective view of a throttle body incorporating a rotary butterfly valve according to an embodiment of the present invention;
Fig. 3 is a perspective view of the shaft of the rotary valve of Fig. 2;
Fig. 4 is a detail sectional view of the shaft fixing arrangement of the valve of Fig. 2;

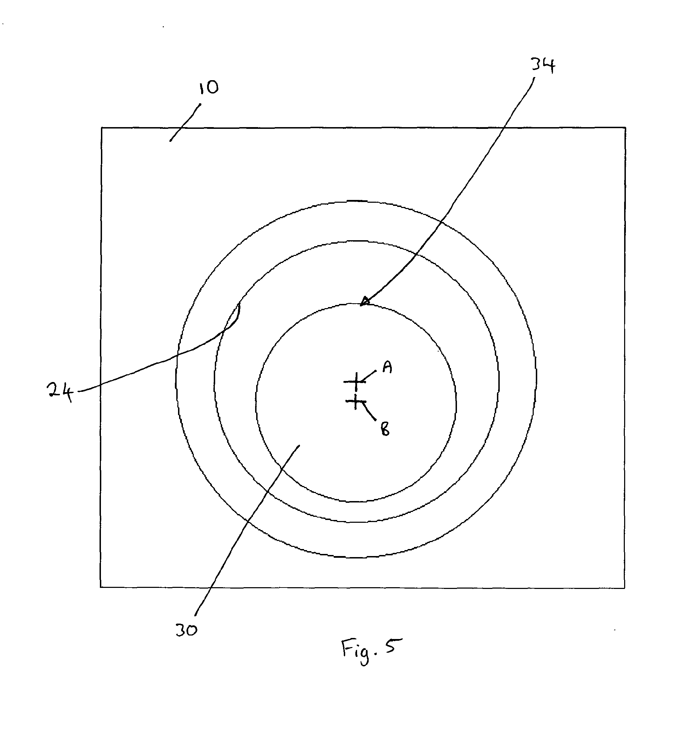

Fig. 5 is a side view of the valve of Fig 2 with the shaft and bush removed for clarity.

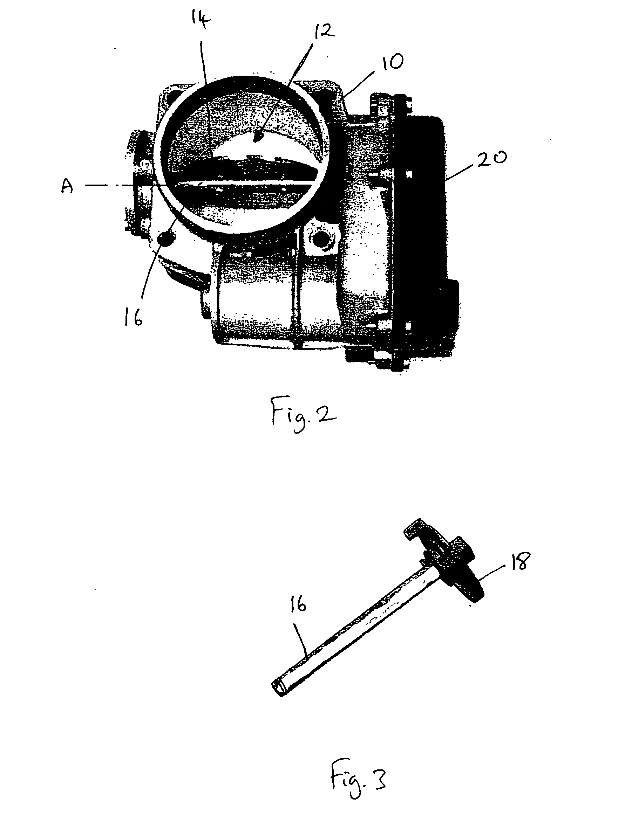

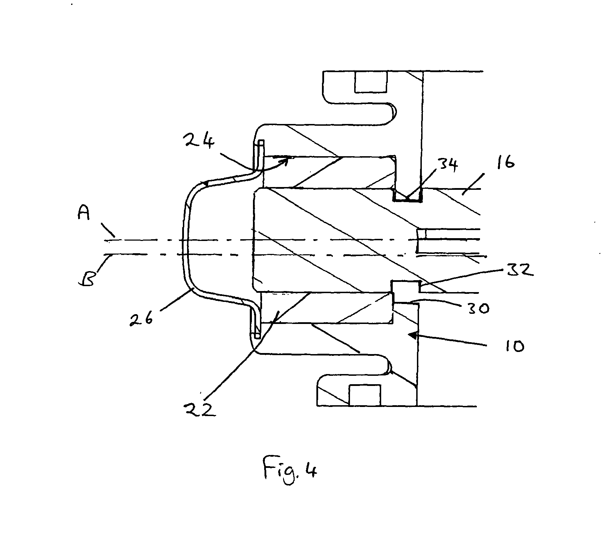

As shown in the drawings, the throttle body comprises a housing 10 through having a passage 12 therethrough for transferring intake air to an engine, a disk-shaped throttling member 14 being positioned in the passage. The throttling member 14 is mounted to rotate with a shaft 16 about a rotary axis A, wherein said shaft 16 is transverse to the passage 12 and is journal-mounted in the housing 10 on each side of the passage 12. As shown in Fig. 3, an actuating gear 18 is over-moulded on a first end of the shaft 16 to enable the shaft to be driven by an actuating motor via a gearbox 20. A second, opposite, end of the shaft 16 is supported in a bush 22 in one side of the housing 10, as shown in Fig. 4.

The bush 22 is located in a bore 24 provided in an outer side region of the housing 10. A cap 26 closes of the bore 24 to protect the bush 22 from dirt and to prevent leakage.

A shaft retaining opening 30 is provided in the housing in the base of the bore 24, the retaining opening 30 having a diameter slightly greater than the diameter of the shaft 16, whereby the second end of the shaft 16 can pass through the retaining opening 30.

The retaining opening 30 is circular and has a centre B radially offset from the rotary axis A. A circumferential groove 32 is provided around an end of the shaft 16 having a depth greater than or equal to the offset of the centre B of the retaining opening 30 from the rotary axis A.

During assembly, the second end of the shaft 16 is oriented out of alignment with the rotary axis A inserted through the retaining opening 30 and the shaft 16 is then brought into alignment with the rotary axis A, whereby an edge region 34 of the retaining opening 30 closest to the rotary axis A enters into the circumferential groove 32 of the shaft 16. The bush 22 is then inserted into the bore 24 to fit around the second end of the shaft 16 to support the shaft 16 in alignment with the rotary axis A and to prevent radial movement of the second end of the shaft 16, thus retaining said region of the retaining opening in the circumferential groove 32 and thus restraining the shaft from translational movement.

In order to obviate the need for a cap 26, the bush 22 can comprise a blind plug whereby the bush 22 can carry out the combined function of supporting locating the shaft 16 in alignment with the rotary axis while at the same time closing off the end of the shaft 16 to prevent leakage from the shaft and contamination of the passage 12.

The reduce the chance of leakage into the passage 12 along the shaft 16, the centre B of the retaining opening 30 is preferably offset from the rotary axis A in a direction opposite to the normal flow direction of fluids or gases through the passage 12.

Thus, the present invention provides reliable axial fixation of the shaft 16 in the housing 10 without requiring the use of any additional securing means, such as circlips or split pins, simplifying assembly and reducing the cost of the component.

Various modifications and variations to the described embodiment of the invention will be apparent to those skilled in the art without departing from the scope of the invention as defined in the appended claims. Although the invention has been described in connection with a specific preferred embodiment, it should be understood that the invention as claimed should not be unduly limited to such specific embodiment.

For example, rather than being eccentrically arranged with relation to the to the rotary axis A, the retaining opening may be concentric with the rotary axis, the opening including an inwardly radially extending retaining portion having a radial spacing from the rotary axis less than the radius of the shaft 16, wherein the minimum diameter of the retaining opening is still large enough to permit the shaft to pass therethrough when the shaft is oriented out of alignment with the rotary axis, the retaining portion of the opening engaging the circumferential groove of the shaft 16 to hold the shaft in position when the shaft is brought into alignment with the rotary axis A.

## Claims

1. A rotary device comprising a shaft mounted within a housing to be rotatable about a rotary axis, the housing including an opening having a minimum diameter greater than or equal to the diameter of the shaft to permit an end of the shaft to be inserted therethrough, a portion of said opening having a radial spacing from said rotary axis less than the radius of the shaft, said end of the shaft including a circumferential groove into which said portion of the opening is receivable to prevent axial movement of the shaft when the shaft is aligned with said rotary axis, a locating means being mountable in or on said housing adjacent said opening to be located over said end of the shaft whereby the locating means radially locates and holds said end of the shaft in alignment with said rotary axis.

2. A device as claimed in claim 1, wherein said opening comprises a circular aperture having a centre offset from said rotary axis and a diameter equal to or greater than the diameter of the shaft.

3. A device as claimed in claim 1 or claim 2, wherein said locating means comprises a bush locatable within a bore adjacent said opening and cooperating with said portion of the opening and said circumferential groove of said shaft to support and retain said end of the shaft within the housing for rotation about said rotary axis.

4. A device as claimed in claim 3, wherein said bush comprises a blind plug for closing the bore as well as supporting the end of the shaft.

5. A device as claimed in any preceding claim, wherein the device is a butterfly valve, the housing including at least one passage extending therethrough, a disk-shaped throttling member being positioned in the passage, the throttling member being mounted on the shaft to rotate therewith about said rotary axis, wherein said shaft extends transverse to the passage and is journal-mounted in the housing on each side of the passage.

6. A butterfly valve as claimed in claim 5, wherein said opening comprises a circular aperture having a centre offset from said rotary axis in a direction opposite to the normal direction of flow through the passage and a diameter equal to or greater than the diameter of the shaft

7. A method of retaining a shaft within a housing of a rotary device to be rotatable about a rotary axis, said housing including an opening having a minimum diameter greater than or equal to the diameter of the shaft to permit an end of the shaft to be inserted therethrough, a portion of said opening having a radial spacing from said rotary axis less than the radius of the shaft, said end of the shaft including a circumferential groove into which said portion of the opening is receivable, comprising the steps of inserting said end of said shaft through said opening, aligning said shaft with said rotary axis whereby said portion of the opening is received within said circumferential groove, and mounting a locating means on or in the housing over said end of the shaft to locate and hold said end of the shaft in alignment with said rotary axis.

8. A method as claimed in claim 7, wherein said locating means comprises a bush and the step of mounting said locating means on or in the housing comprises inserting said bush into a bore in said housing adjacent said opening to retain said end of the shaft within the housing for rotation about said rotary axis.
